# DEMANDE DE BREVET EUROPEEN

(11) **EP 0 657 726 A1**
(43) Date de publication de la demande: **14.06.1995**
(21) Numéro de dépôt: 94402875.2
(22) Date de dépôt: 13.12.1994
(51) Int. Cl.: G01L 5/10, G01L 5/04

(54) **Détecteur d'effort de traction**

(30) Priorité: 13.12.1993 FR 9314930
(71) Demandeur: QUID'TRONIC, Société Anonyme, 94100 Saint Maur des Fosses (FR)
(72) Inventeur: Izadnegahdar, Alain, F-94430 Chennevieres Sur Marne (FR)
(74) Mandataire: Dupuis-Latour, Dominique

(57) **Abrégé**

Le détecteur comprend :
- une pièce sensible allongée (6), élastiquement déformable, en forme de lame ou de tige disposée dans un boîtier (1) avec ses deux extrémités maintenues essentiellement fixes par rapport au boîtier, et reliée en un point central à une corde (5) de manière à recevoir les sollicitations de traction de celle-ci,
- des moyens de butée (8), formant un ressaut par rapport aux points de maintien (7) des extrémités de la pièce sensible, de manière à solliciter cette dernière en flexion permanente de précontrainte et forcer en appui la région médiane de la pièce sensible contre les moyens de butée, et
- des moyens électriques, pour détecter la déformation de la pièce sensible résultant de l'application à cette dernière, par la corde sous tension, d'une sollicitation (F) de nature à provoquer une flexion supplémentaire de cette dernière à l'encontre de la flexion permanente de précontrainte.

## Description

L'invention concerne un dispositif pour détecter un effort de traction exercé entre un boîtier et une corde reliée à ce boîtier.

Par "détection", on entendra principalement la détection du dépassement d'un seuil prédéterminé d'effort de traction, par exemple pour déclencher un dispositif d'avertissement approprié. Cependant, l'invention vise également la mesure d'un effort, c'est-à-dire la production d'un signal électrique fonction de cet effort, ce signal pouvant éventuellement être ensuite comparé à une valeur de consigne pour produire un signal d'avertissement en cas de dépassement du seuil correspondant.

Par ailleurs, bien que l'on considérera un effort exercé entre une corde et un boîtier, ce boîtier peut être lui-même relié à une autre corde, de sorte que l'ensemble équivaudra à détecter l'effort exercé purement et simplement sur une section de corde, cette détection étant réalisée par interposition d'un boîtier divisant la corde en deux demi-sections.

L'invention vise tout particulièrement la réalisation d'un tel détecteur adapté à une production en grande série et pour des produits grand public, donc à très faible coût, tout en assurant une fiabilité maximale, compatible avec une utilisation prolongée et sans précautions, propre à ce genre de produit.

Subsidiairement, on verra que le détecteur de l'invention conserve ses qualités même si l'effort de traction s'exerce en formant un angle relativement important (jusqu'à quelques dizaines de degrés) avec l'axe de symétrie du détecteur, ce qui permet de l'utiliser sans précaution particulière dans une très grande variété de configurations et d'applications.

Pour atteindre ces buts, le détecteur de l'invention comprend : une pièce sensible allongée, élastiquement déformable, en forme de lame ou de tige disposée dans le boîtier avec ses deux extrémités maintenues essentiellement fixes par rapport au boîtier, et reliée en un point central à la corde de manière à recevoir les sollicitations de traction de celle-ci ; des moyens de butée, formant, par rapport aux points de maintien des extrémités de la pièce sensible, un ressaut orienté dans la direction normale à la plus grande dimension de la pièce sensible, de manière à solliciter cette dernière en flexion permanente de précontrainte et forcer en appui la région médiane de la pièce sensible contre les moyens de butée ; et des moyens électriques, pour détecter la déformation de la pièce sensible résultant de l'application à cette dernière, par la corde sous tension, d'une sollicitation de nature à provoquer une flexion supplémentaire de cette dernière à l'encontre de la flexion permanente de précontrainte.

Dans une première forme, préférentielle, de réalisation, la pièce sensible est métallique et les moyens de butée comprennent deux appuis métalliques disposés approximativement symétriquement de part et d'autre du centre de la pièce sensible de manière que, en l'absence de traction sur la corde, la pièce sensible ferme un contact électrique entre les deux appuis métalliques sous l'effet de la flexion de précontrainte, lesdits moyens électriques étant des moyens pour détecter l'ouverture de ce contact consécutive au dépassement d'un seuil prédéterminé par l'effort de traction sur la corde.

Dans une autre forme de réalisation, la pièce sensible porte une jauge de contrainte, lesdits moyens électriques étant des moyens pour mesurer les variations des paramètres électriques de la jauge de contrainte consécutives à la variation de l'effort de traction.

De préférence, la pièce sensible et les moyens de butée sont enfermés dans une cavité du boîtier distincte de celle recevant les moyens électriques et isolée de celle-ci, cette première cavité communiquant avec l'extérieur par l'intermédiaire de deux orifices en vis-à-vis permettant de passer la corde autour de la pièce sensible. Il est alors de préférence prévu entre la région médiane de la pièce sensible et la paroi de la cavité en vis-à-vis de cette région médiane un intervalle de dimension déterminée de manière que, en cas d'effort de traction excessif sur la corde, la pièce sensible vienne porter contre cette paroi en vis-à-vis et limiter ainsi la déformation de la pièce sensible à une amplitude inférieure au seuil de déformation plastique de celle-ci.

Le boîtier peut comporter un orifice permettant de le relier à une autre corde, l'effort de traction étant alors exercé entre la première corde et cette autre corde. La direction selon laquelle est exercé l'effort de traction peut former un angle avec l'axe de symétrie du détecteur, cet axe de symétrie étant principalement orienté suivant la direction normale à la plus grande dimension de la pièce sensible.

D'autres caractéristiques et avantages apparaîtront à la lecture de la description détaillée ci-dessous d'un exemple de réalisation de l'invention, en référence aux dessins annexés.

La figure 1 est une vue en coupe d'un boîtier comprenant un détecteur selon l'invention.

La figure 2 est une représentation schématique du circuit électronique associé au détecteur de la figure 1.

La figure 3 correspond à une variante de réalisation permettant d'effectuer une mesure du niveau de l'effort de traction.

La figure 4 est une illustration schématique du circuit électronique associé à la variante de la figure 3.

Le détecteur de l'invention est logé dans un boîtier 1 pourvu de deux trous 2 et 3 auxquels sont reliées deux sections de corde respectives 4 et 5. Le détecteur a pour fonction de mesurer l'effort de traction F exercé sur la corde constituée des deux demi-sections 4 et 5 (traction F dans un sens et réaction F dans l'autre sens).

Le détecteur proprement dit utilise un fil ou lame 6 en acier à ressort, maintenu à ses deux extrémités dans des encoches 7 et sollicité en flexion par des appuis 8 venant porter sur la partie médiane du fil 6. Ces appuis 8 sont en saillie dans la direction Δ perpendiculaire à la plus grande dimension du fil ressort 6, de manière à solliciter ce dernier en flexion permanente.

Les appuis 8 peuvent être notamment constitués par deux pièces métalliques, qui sont donc mises en court-circuit par le fil 6 ; l'effort de flexion est tel que, au repos (c'est-à-dire en l'absence de toute traction sur la corde), l'appui est réalisé avec une force prédéterminée Fₒ. La section 5 de la corde est passée dans le trou 3 autour du fil ressort 6, de sorte que la sollicitation par la force de traction F va avoir tendance à éloigner le fil ressort 6 des appuis 8. Cependant, le contact restera maintenu tant que l'effort F restera inférieur au seuil constitué par la force Fₒ de précontrainte. Lorsque la force F va dépasser ce seuil, le fil ressort 6 va quitter les appuis 8, ouvrant ainsi le circuit électrique correspondant. Cette ouverture pourra être détectée par tout circuit électrique ou électronique approprié et déclencher par exemple un dispositif d'avertissement ou une signalisation ou action particulière.

De préférence, le fil 6 est disposé dans un logement 9 isolé du reste du boîtier, de manière à protéger les circuits contenus par ce dernier notamment de l'humidité qui pourrait pénétrer par le trou 3. La construction très simple du détecteur de l'invention permet précisément d'assurer sans difficulté cet isolement. De préférence, la dimension du logement 9 est telle qu'il ne subsiste en vis-à-vis de la région médiane du fil ressort 6 qu'un intervalle 10 limité, permettant, pour des efforts de traction très importants, d'empêcher que le fil ressort ne soit sollicité au-delà de sa limite de déformation élastique, le fil venant en butée contre la paroi du logement située en vis-à-vis de la partie médiane.

On notera que la structure du dispositif de l'invention permet d'accepter un effort de traction exercé suivant une direction D (c'est-à-dire la direction d'ensemble de la corde) faisant un angle α relativement important (jusqu'à quelques dizaines de degrés) avec l'axe de symétrie Δ du détecteur et du boîtier. Cette configuration se rencontre en particulier lorsque le trou 2 est excentré par rapport à cet axe Δ, ce qui peut être utile ou nécessaire en fonction des circonstances, le fonctionnement et les caractéristiques du détecteur n'étant pas affectés par ce décalage angulaire. De la même façon, le détecteur de l'invention pourrait accepter un décalage angulaire du même ordre entre la direction D et le plan contenant le fil ressort (cas où l'axe D formerait un angle avec le plan de la figure).

On peut par exemple utiliser un fil en acier à ressort de 1 mm de diamètre et de 30 mm de long, avec des appuis 8 décalés en direction transversale de 0,5 mm environ, ce qui permet d'obtenir un seuil de déclenchement de l'ordre de 20 N.

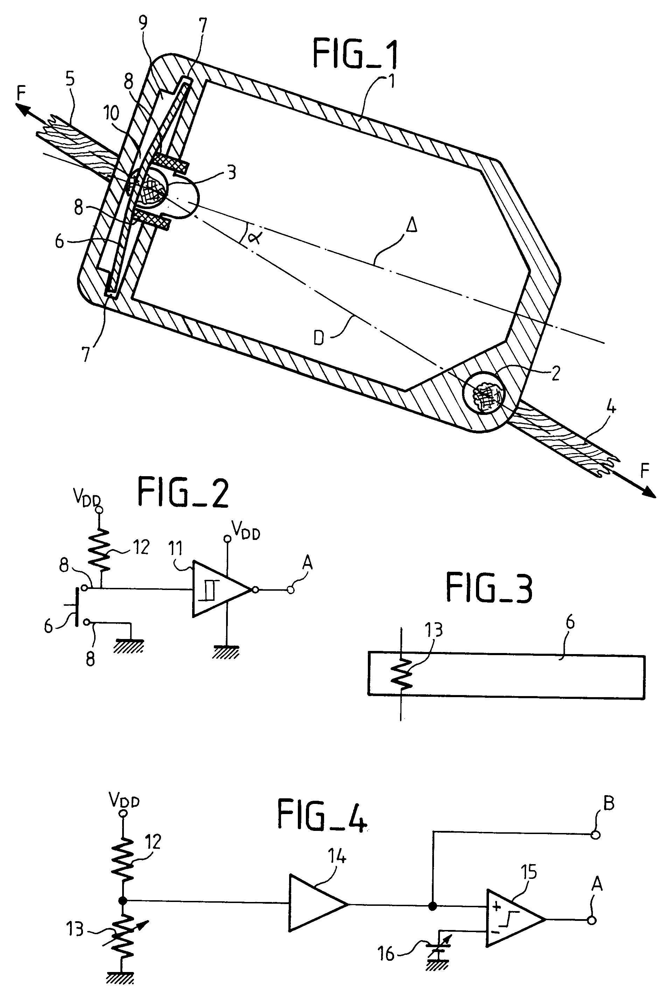

La figure 2 illustre schématiquement un circuit permettant de détecter l'ouverture du circuit entre les deux appuis métalliques 8 : l'un des conducteurs 8 étant relié à la masse, l'autre conducteur est relié à l'entrée d'une bascule formant trigger de Schmitt 11 pour éviter les problèmes de rebonds au moment de l'ouverture ou de la fermeture des contacts ; cette entrée est polarisée au niveau haut par une résistance 12 reliée à la source d'alimentation positive V_{DD}. En l'absence d'effort, le fil ressort 6 ferme le contact et force donc l'entrée de la bascule 11 au niveau bas. Dès que l'effort de traction dépasse le seuil prédéterminé, le contact s'ouvre, l'entrée de la bascule 11 est forcé au niveau haut, et il apparaît un signal sur sa sortie A.

En variante, le dispositif de l'invention peut être utilisé pour effectuer une mesure du niveau de traction sur la corde. À cet effet, on utilise pour l'élément 6 une lame (métallique ou non) sur laquelle, comme illustré figure 3, est collée une jauge de contrainte 13. Sous la déformation de la lame, la résistance de la jauge varie de façon continue.

Comme illustré figure 4, cette variation continue peut être mesurée par une chaîne d'amplification 14, dont l'entrée reçoit la tension du point milieu d'un pont diviseur constitué d'une résistance de polarisation 12 et de la jauge de contrainte 13. Il apparaît donc en B un signal électrique proportionnel à la force F. Ce signal peut être appliqué à un comparateur 15 dont l'autre entrée reçoit une tension de consigne 16 pour opérer une détection de seuil, un signal étant produit en A lorsque l'effort de traction dépasse un niveau prédéterminé.

Compte tenu de sa très grande simplicité de construction et de sa robustesse, l'invention est particulièrement appropriée aux applications grand public nécessitant une production en grande série à faible coût.

Un exemple d'une telle application est la réalisation de dispositifs anti-traction pour le dressage des chiens, dispositifs qui sont interposés sur une laisse pour détecter un effort excessif exercé par l'animal sur celle-ci.

## Revendications

1. Un détecteur d'effort de traction, cet effort étant exercé entre un boîtier (1) et une corde (5) reliée à ce boîtier, caractérisé en ce qu'il comprend :
- une pièce sensible allongée (6), élastiquement déformable, en forme de lame ou de tige disposée dans le boîtier avec ses deux extrémités maintenues essentiellement fixes par rapport au boîtier, et reliée en un point central à la corde de manière à recevoir les sollicitations de traction de celle-ci,
- des moyens de butée (8), formant, par rapport aux points de maintien (7) des extrémités de la pièce sensible, un ressaut orienté dans la direction (Δ) normale à la plus grande dimension de la pièce sensible, de manière à solliciter cette dernière en flexion permanente de précontrainte et forcer en appui la région médiane de la pièce sensible contre les moyens de butée, et
- des moyens électriques (11, 12, 13, 14, 15), pour détecter la déformation de la pièce sensible résultant de l'application à cette dernière, par la corde sous tension, d'une sollicitation (F) de nature à provoquer une flexion supplémentaire de cette dernière à l'encontre de la flexion permanente de précontrainte.

2. Le détecteur de la revendication 1, dans lequel la pièce sensible est métallique et les moyens de butée comprennent deux appuis métalliques (8) disposés approximativement symétriquement de part et d'autre du centre de la pièce sensible de manière que, en l'absence de traction sur la corde, la pièce sensible ferme un contact électrique entre les deux appuis métalliques sous l'effet de la flexion de précontrainte, lesdits moyens électriques (11, 12) étant des moyens pour détecter l'ouverture de ce contact consécutive au dépassement d'un seuil prédéterminé par l'effort de traction sur la corde.

3. Le détecteur de la revendication 1, dans lequel la pièce sensible porte une jauge de contrainte (13), lesdits moyens électriques (12, 14, 15) étant des moyens pour mesurer les variations des paramètres électriques de la jauge de contrainte consécutives à la variation de l'effort de traction.

4. Le détecteur de la revendication 1, dans lequel la pièce sensible et les moyens de butée sont enfermés dans une cavité (9) du boîtier distincte de celle recevant les moyens électriques et isolée de celle-ci, cette première cavité communiquant avec l'extérieur par l'intermédiaire de deux orifices (3) en vis-à-vis permettant de passer la corde autour de la pièce sensible.

5. Le détecteur de la revendication 4, dans lequel il est prévu entre la région médiane de la pièce sensible et la paroi de la cavité en vis-à-vis de cette région médiane un intervalle (10) de dimension déterminée de manière que, en cas d'effort de traction excessif sur la corde, la pièce sensible vienne porter contre cette paroi en vis-à-vis et limiter ainsi la déformation de la pièce sensible à une amplitude inférieure au seuil de déformation plastique de celle-ci.

6. Le détecteur de la revendication 1, dans lequel le boîtier comporte un orifice (2) permettant de le relier à une autre corde, l'effort de traction étant alors exercé entre la première corde et cette autre corde.

7. Le détecteur de la revendication 1, dans lequel la direction (D) selon laquelle est exercé l'effort de traction forme un angle (α) avec l'axe de symétrie du détecteur (Δ), cet axe de symétrie étant principalement orienté suivant la direction normale à la plus grande dimension de la pièce sensible.
